# EUROPEAN PATENT SPECIFICATION

(11) **EP 3 963 999 B1**
(45) Date of publication and mention of the grant of the patent: **25.03.2026**
(21) Application number: 20725256.0
(22) Date of filing: 30.04.2020
(51) Int. Cl.: H04W 72/1268, H04W 72/21

(54) **RADIO NETWORK NODE, UE AND METHODS PERFORMED THEREIN FOR HANDLING COMMUNICATION**
FUNKNETZWERKKNOTEN, BENUTZERGERÄT UND DARIN DURCHGEFÜHRTES VERFAHREN ZUR HANDHABUNG VON KOMMUNIKATION
NOEUD DE RÉSEAU RADIO, UE ET PROCÉDÉS MIS EN OEUVRE DANS CELUI-CI POUR GÉRER UNE COMMUNICATION

(30) Priority: 02.05.2019 US 201962841871 P
(43) Date of publication of application: 09.03.2022
(73) Proprietor: Telefonaktiebolaget LM Ericsson (publ), 164 83 Stockholm (SE)
(72) Inventor: HÖGLUND, Andreas, 170 62 Solna (SE); LIBERG, Olof, 118 49 Stockholm (SE); TIRRONEN, Tuomas, 00950 Helsinki (FI); YAVUZ, Emre, 112 52 Stockholm (SE)
(74) Representative: Ericsson
(86) International application number: PCT/SE2020/050437
(87) International publication number: WO 2020/222694

(56) References cited:
- SIERRA WIRELESS: "Pre-configured UL Resources Design Considerations", vol. RAN WG2, no. Spokane, USA; 20181112 - 20181116, 12 November 2018 (2018-11-12), XP051557451, Retrieved from the Internet <URL:http://www.3gpp.org/ftp/Meetings%5F3GPP%5FSYNC/RAN2/Docs/R2%2D1817940%2Ezip> [retrieved on 20181112]
- ZTE CORPORATION ET AL: "Further consideration on UL aspects of D-PUR in IDLE", vol. RAN WG2, no. Xi'an, China; 20190408 - 20190412, 6 April 2019 (2019-04-06), XP051700829, Retrieved from the Internet <URL:http://www.3gpp.org/ftp/Meetings%5F3GPP%5FSYNC/RAN2/Docs/R2%2D1903485%2Ezip> [retrieved on 20190406]
- HUAWEI ET AL: "Transmission in preconfigured UL resources", vol. RAN WG1, no. Xi'an, China; 20190408 - 20190412, 7 April 2019 (2019-04-07), XP051699343, Retrieved from the Internet <URL:http://www.3gpp.org/ftp/Meetings%5F3GPP%5FSYNC/RAN1/Docs/R1%2D1903910%2Ezip> [retrieved on 20190407]
- HUAWEI ET AL: "Analysis on resource types for PUR", vol. RAN WG2, no. Xi'an, China; 20190408 - 20190412, 6 April 2019 (2019-04-06), XP051700760, Retrieved from the Internet <URL:http://www.3gpp.org/ftp/Meetings%5F3GPP%5FSYNC/RAN2/Docs/R2%2D1903415%2Ezip> [retrieved on 20190406]
- ERICSSON: "Support for transmission in preconfigured UL resources in NB-IoT", vol. RAN WG1, no. Athens, Greece; 20190225 - 20190301, 15 February 2019 (2019-02-15), XP051599442, Retrieved from the Internet <URL:http://www.3gpp.org/ftp/tsg%5Fran/WG1%5FRL1/TSGR1%5F96/Docs/R1%2D1901747%2Ezip> [retrieved on 20190215]
- NOKIA ET AL: "Preconfigured Grant for Uplink transmission", vol. RAN WG1, no. Chengdu, China; 20181008 - 20181012, 28 September 2018 (2018-09-28), XP051518476, Retrieved from the Internet <URL:http://www.3gpp.org/ftp/tsg%5Fran/WG1%5FRL1/TSGR1%5F94b/Docs/R1%2D1811074%2Ezip> [retrieved on 20180928]
- SIERRA WIRELESS: "Pre-configured UL Resources Design Considerations", vol. RAN WG2, no. Spokane, USA; 20181112 - 20181116, 12 November 2018 (2018-11-12), XP051557451, Retrieved from the Internet <URL:http://www.3gpp.org/ftp/Meetings%5F3GPP%5FSYNC/RAN2/Docs/R2%2D1817940%2Ezip> [retrieved on 20181112]
- ZTE CORPORATION ET AL: "Further consideration on UL aspects of D-PUR in IDLE", vol. RAN WG2, no. Xi'an, China; 20190408 - 20190412, 6 April 2019 (2019-04-06), XP051700829, Retrieved from the Internet <URL:http://www.3gpp.org/ftp/Meetings%5F3GPP%5FSYNC/RAN2/Docs/R2%2D1903485%2Ezip> [retrieved on 20190406]
- HUAWEI ET AL: "Transmission in preconfigured UL resources", vol. RAN WG1, no. Xi'an, China; 20190408 - 20190412, 7 April 2019 (2019-04-07), XP051699343, Retrieved from the Internet <URL:http://www.3gpp.org/ftp/Meetings%5F3GPP%5FSYNC/RAN1/Docs/R1%2D1903910%2Ezip> [retrieved on 20190407]

## Description

### TECHNICAL FIELD

The present disclosure relates to telecommunications. Embodiments herein relate to a radio network node, a User Equipment (UE) and methods performed therein regarding wireless communication. In particular, embodiments herein relate to handling communication in a wireless communication network using preconfigured resources.

### BACKGROUND

In a typical wireless communication network, user equipment (UEs), also known as wireless communication devices, mobile stations, wireless devices and/or stations (STA), may communicate via a Radio Access Network (RAN) to one or more core networks (CN). The RAN covers a geographical area, which is divided into service areas, also known as cells, with each cell being served by a radio network node e.g., a Wi-Fi access point or a radio base station (RBS), which in some networks may also be called, for example, a NodeB, an eNodeB or a gNodeB. The cell is a geographical area where radio coverage is provided by the radio network node. The radio network node operates on radio frequencies to communicate over an air interface with the UEs within range of the radio network node. The radio network node communicates over a downlink (DL) to the UE and the UE communicates over an uplink (UL) to the radio network node.

A Universal Mobile Telecommunications network (UMTS) is a third generation (3G) telecommunications network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for UEs. In a forum known as the Third Generation Partnership Project (3GPP), telecommunications suppliers propose and agree upon standards for e.g. third generation networks, and investigate enhanced data rate and radio capacity and upcoming generation networks. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. This type of connection is sometimes referred to as a backhaul connection. The RNCs and BSCs are typically connected to one or more core networks.

Specifications for the Evolved Packet System (EPS), also called a Fourth Generation (4G) network, have been completed within the 3GPP and this work continues in the coming 3GPP releases, for example to specify a Fifth Generation (5G) network. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

With the emerging 5G technologies such as New Radio (NR), the use of very many transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

There has been a lot of work in 3GPP on specifying technologies to cover Machine-to-Machine (M2M) and/or Internet of Things (IoT) related use cases. Most recent work for 3GPP Release 13, 14 and 15 includes enhancements to support Machine-Type Communications (MTC) with new UE categories (Cat-M1, Cat-M2), supporting reduced bandwidth of up to 6 and 24 physical resource blocks (PRBs), and Narrowband loT (NB-IoT) UEs providing a new radio interface, and UE categories Cat-NB1 and Cat-NB2.

It is herein referred to the LTE enhancements introduced in 3GPP Release 13, 14, and 15 for MTC as "eMTC", including, not limiting, support for bandwidth limited UEs, Cat-M1, and support for coverage enhancements. This is to separate discussions from NB-IoT (notation here used for any Release), although the supported features are similar on a general level.

For both eMTC and NB-IoT, 'CIoT EPS UP optimization' and 'CIoT EPS CP optimization' signaling reductions were also introduced in Rel-13. The former, here referred to as user plane (UP)-solution, allows the UE to resume a previously stored radio resource control (RRC) connection, thus also known as RRC Suspend/Resume. The latter, here referred to as control plane (CP)-solution, allows the transmission of user-plane data over non access stratum (NAS), aka DoNAS.

### SUMMARY

There are multiple differences between "legacy" LTE and the procedures and channels defined for eMTC and for NB-loT. Some important differences include a new physical channel, such as the physical downlink control channels, called MPDCCH in eMTC and NPDCCH in NB-loT, and a new physical random access channel, NPRACH, for NB-loT. Another important difference is the coverage level, also known as coverage enhancement level, that these technologies can support. By applying repetitions to the transmitted signals and channels, both eMTC and NB-IoT allow UE operation down to much lower SNR level compared to LTE, i.e. Es/lot ≥ -15 dB being the lowest operating point for eMTC and NB-loT, which can be compared to Es/loT ≥ -6 dB for "legacy" LTE. The Rel-16 Work Item (WI) Descriptions for LTE-M and NB-IoT contain a common objective on improving the uplink transmission efficiency and/or UE power consumption by means of transmission in preconfigured resources:

### Improved UL transmission efficiency and/or UE power consumption:

- Specify support for transmission in preconfigured resources in idle and/or connected mode based on SC-FDMA waveform for UEs with a valid timing advance[RAN1, RAN2, RAN4]
   o Both shared resources and dedicated resources can be discussed
   o Note: This is limited to orthogonal (multi) access schemes

Dedicated preconfigured uplink resources is from here on referred to as D-PUR. So far, it has been agreed that D-PUR in RRC Idle mode will be supported, and likely both with periodic configurations and configuration for one D-PUR transmission only a.k.a. 'one-shot D-PUR'.

It has been agreed that hybrid automatic repeat request (HARQ) retransmissions will be used for PUR, and a DL PUR Msg may also be supported. Therefore, a PUR UE will have to monitor (M/N)PDCCH after the UL PUR transmission for a) DCI with L1 ACK, b) DCI scheduling a HARQ retransmission, or c) DCI scheduling a downlink (RRC) message. The following agreements have been made related to this:

### Agreement

In IDLE mode, HARQ is supported for transmission in dedicated PUR
- A single HARQ process is supported,
   o FFS whether more than one HARQ processes are supported
- FFS: The design of the corresponding (M/N)PDCCH search space

### Agreement [NB-loT]

In idle mode, only one HARQ process is supported for dedicated PUR

### Agreement

For dedicated PUR in idle mode, UL grant for HARQ retransmission is transmitted in (MPDCCH) search space
- FFS: Details on the search space (for example USS, CSS)

### Agreement [LTE-M]

For dedicated PUR in idle mode, upon successful decoding by eNB of a PUR transmission, the UE can expect an explicit ACK
FFS: if ACK is sent on MPDCCH (layer 1) and/or PDSCH (layer 2/3)
Include in LS to RAN2, RAN4.

### Agreement [LTE-M]

For dedicated PUR in idle mode, upon unsuccessful decoding by eNB of a PUR transmission, the UE can expect
- an UL GRANT for retransmission on the MPDCCH, or
- FFS: a NACK, or
- FFS: no explicit ACK

Include in LS to RAN2, RAN4.

### Agreement

For dedicated PUR in idle mode, the dedicated PUR ACK is at least sent on (M/N)PDCCH
- FFS: Whether to introduce new field in DCI or reuse existing field [NB-IoT only]
- RAN2 can decide if a higher layer PUR ACK is also supported

### Agreement

For dedicated PUR in idle mode, the PUR search space configuration shall be included in the PUR configuration.
- PUR search space is the search space where UE monitors for (M/N)PDCCH
- FFS: Whether PUR search space is common or UE specific

### Agreement [NB-loT]

After data transmission on PUR, upon unsuccessful decoding by eNB, the UE can expect an UL grant for retransmission on NPDCCH. Other behaviors are FFS.

### Working Assumption#2

For dedicated PUR
- During the PUR search space monitoring, the UE monitors for DCI scrambled with a radio network temporary identifier (RNTI) assuming that the RNTI is not shared with any other UE
   o Note: It is up to RAN2 to decide how the RNTI is signaled to UE or derived
- FFS if the UE monitors any additional RNTI which may be shared with other UEs.
- Note: The same RNTI may be used over non-overlapping time and/or frequency resources

Another agreement that is also relevant for the discussion is the following one:

### Agreement

For dedicated PUR in idle mode, the UE may skip UL transmissions.
- FFS: Resource release mechanism
- FFS: Whether or not to support mechanism to disable skipping by eNB

Finally, the last agreements below are most related to what is discussed herein:

### Agreement

In idle mode, the PUR search space configuration includes at least the following:
- MPDCCH narrowband location [LTE-M]
- (M/N)PDCCH repetitions and aggregation levels
- (M/N)PDCCH starting subframe periodicity (variable G)
- Starting subframe position (alpha_offset)

### Agreement

The UE monitors the (M/N)PDCCH for at least a time period after a PUR transmission.
- FFS: Details of the time period
- FFS: UE behaviour if nothing is received in that time period.
- FFS: If and how often UE monitors (M/N)PDCCH after a PUR allocation in which it has not transmitted

In a case of dedicated PUR, working assumption 2 suggest that UE specific RNTIs are used to identify downlink control information (DCI) transmitted on the control channel such as (M/N)PDCCH. The RNTI space is limited to 2^16 = 65536 values, and allocation of parts of the available RNTI space long-term to devices in radio resource control (RRC) Idle will reduce the available space for devices in RRC Connected. With many UEs using PUR this may become problematic, considering allocation of RNTI values for UEs staying in RRC Idle is more static compared to UEs in RRC Connected, where it is faster and more dynamic to e.g. release UE configuration if needed.

It is in view of the above background and other considerations that the various embodiments of the present disclosure have been made.

An object of embodiments herein is therefore to provide a mechanism to, in an efficient manner, enable communication in a wireless communication network using PUR.

These general objects have been addressed by the appended independent claims. Advantageous embodiments are defined in the appended dependent claims.

According to a first aspect, there is provided a method performed by a UE for controlling communication in a wireless communication network using preconfigured resources. The method comprises transmitting a message to a radio network node using the preconfigured resources, wherein the UE is to be identified by the radio network node based on the message and wherein the identification of the UE further is associated with at least one of a preconfigured resource configuration and an indication that the message is associated with a preconfigured resource transmission. The UE may be identified based on the message by, for example, information comprised in the message and/or resources used when transmitting the message. The UE may be identified based on characteristics associated with the message.

In some embodiments, the preconfigured resources are PUR.

In some embodiments, the UE is identified based on a RNTI associated with the transmitted message. Alternatively, or additionally, the UE is identified based on at least one of used time and used frequency resources of the transmitted message.

In some embodiments, the method further comprises receiving, from the network node, a PUR configuration indicating whether the UE is to use a contention free or contention resolution procedure for the PUR transmission to the radio network node. The PUR configuration may indicate that the UE is to use a contention resolution procedure by configuration of Common (M/N)PDCCH Search Space (CSS). Alternatively, the PUR configuration may indicate that the UE is to use a contention free procedure by configuration of User-specific (M/N)PDCCH Search Space (USS).

In some embodiments, the method further comprises indicating, to the radio network node, that the message is associated with a PUR transmission. The indication may comprise at least one of a coding indication, a reference signal indication and a modulation indication

According to another aspect the object is achieved, according to embodiments herein, by providing a method performed by a UE for controlling communication in a wireless communication network. The UE transmits to the radio network node an indication, e.g. coding indication, reference signal indication, and/or modulation indication, indicating that the transmission is associated with a PUR transmission.

According to an aspect, there is provided a method performed by a radio network node for controlling communication in a wireless communication network using preconfigured resources. The method comprises receiving a message from a UE using the preconfigured resources, wherein the UE is identified based on the message and wherein the identification of the UE further is associated with at least one of a preconfigured resource configuration and an indication that the message is associated with a preconfigured resource transmission. The UE may be identified based on the message by, for example, information comprised in the message and/or resources used when transmitting the message. The UE may be identified based on characteristics associated with the message.

In some embodiments, the preconfigured resources are PUR.

In some embodiments, the UE is identified based on a RNTI associated with the transmitted message. Alternatively, or additionally, the UE is identified based on at least one of used time and used frequency resources of the transmitted message.

In some embodiments, the method further comprises transmitting, to the UE, a PUR configuration indicating whether the UE is to use a contention free or contention resolution procedure for the PUR transmission to the radio network node. The PUR configuration may indicate that the UE is to use a contention resolution procedure by configuration of Common (M/N)PDCCH Search Space (CSS). Alternatively, the PUR configuration may indicate that the UE is to use a contention free procedure by configuration of User-specific (M/N)PDCCH Search Space (USS).

In some embodiments, the method further comprises receiving, from the UE, an indication that the message is associated with a PUR transmission. The indication may comprise at least one of a coding indication, a reference signal indication and a modulation indication.

According to another aspect, the object is achieved, according to embodiments herein, by providing a method performed by a radio network node for controlling communication in a wireless communication network. The radio network node configures a UE by transmitting PUR configuration to the UE over dedicated signalling indicating whether the UE is to use contention free or contention resolution procedure to access the radio network node when using PUR. Alternatively or additionally, the radio network node may receive a transmission with an indication from the UE indicating that the transmission is associated with a PUR configuration or transmission. The radio network node may then (re)use identities for the UE based on the received indication. According to another aspect, the object is achieved, according to embodiments herein, by providing a radio network node or a UE configured to perform the methods herein.

According to an aspect, there is provided a UE performing the method according to the first aspect.

The UE for controlling communication in a wireless communication network using preconfigured resources is configured to transmit a message to a radio network node using the preconfigured resources, wherein the UE is to be identified by the radio network node based on the message and wherein the identification of the UE further is associated with at least one of a preconfigured resource configuration and an indication that the message is associated with a preconfigured resource transmission. The UE may be identified based on the message by, for example, information comprised in the message and/or resources used when transmitting the message. The UE may be identified based on characteristics associated with the message.

In some embodiments, the preconfigured resources are PUR.

In some embodiments, the UE is identified based on a RNTI associated with the transmitted message. Alternatively, or additionally, the UE is identified based on at least one of used time and used frequency resources of the transmitted message.

In some embodiments, the UE is further configured to receive, from the network node, a PUR configuration indicating whether the UE is to use a contention free or contention resolution procedure for the PUR transmission to the radio network node. The PUR configuration may indicate that the UE is to use a contention resolution procedure by configuration of Common (M/N)PDCCH Search Space (CSS). Alternatively, the PUR configuration may indicate that the UE is to use a contention free procedure by configuration of User-specific (M/N)PDCCH Search Space (USS).

In some embodiments, the UE is further configured to indicate, to the radio network node, that the message is associated with a PUR transmission. The indication may comprise at least one of a coding indication, a reference signal indication and a modulation indication.

According to an aspect, there is provided a network node performing the method according to the third described aspect.

The radio network node for controlling communication in a wireless communication network using preconfigured resources is configured to receive a message from a UE using the preconfigured resources, wherein the UE is identified based on the message and wherein the identification of the UE further is associated with at least one of a preconfigured resource configuration and an indication that the message is associated with a preconfigured resource transmission. The UE may be identified based on the message by, for example, information comprised in the message and/or resources used when transmitting the message. The UE may be identified based on characteristics associated with the message.

In some embodiments, the preconfigured resources are PUR.

In some embodiments, the UE is identified based on a RNTI associated with the transmitted message. Alternatively, or additionally, the UE is identified based on at least one of used time and used frequency resources of the transmitted message.

In some embodiments, the radio network node is further configured to transmit, to the UE, a PUR configuration indicating whether the UE is to use a contention free or a contention resolution procedure for the PUR transmission to the radio network node. The PUR configuration may indicate that the UE is to use a contention resolution procedure by configuration of Common (M/N)PDCCH Search Space (CSS). Alternatively, the PUR configuration may indicate that the UE is to use a contention free procedure by configuration of User-specific (M/N)PDCCH Search Space (USS).

In some embodiments, the radio network node is further configured to receive, from the UE, an indication that the message is associated with a PUR transmission. The indication may comprise at least one of a coding indication, a reference signal indication and a modulation indication.

It is furthermore provided herein a computer program product comprising instructions, which, when executed on at least one processor, cause the at least one processor to carry out any of the methods above, as performed by the radio network node or the UE. It is additionally provided herein a computer-readable storage medium, having stored thereon a computer program product comprising instructions which, when executed on at least one processor, cause the at least one processor to carry out the method according to any of the methods above, as performed by the radio network node or the UE.

Embodiments herein provide method and apparatus to optimize the Preconfigured Uplink Resources (PUR) control channel, such as (M/N)PDCCH, search space for low UE power consumption. Embodiments herein provide solutions for addressing the RNTI limitation: a physical (PHY)-layer solution which optimizes the RNTI space for PUR transmissions, and a higher-layer solution where it is configurable by the network such as the radio network node if contention resolution mechanism should be used or not, hence either allowing RNTI overlap or not. This optimizes the RNTI space for PUR transmission for large volumes of UEs. That is, to allow a functional solution for PUR without running out of RNTI values for assigning to UEs. Thus, it is herein provided an efficient manner to enable communication in the wireless communication network.

### BRIEF DESCRIPTION OF THE DRAWINGS

Embodiments will now be described in more detail in relation to the enclosed drawings, in which:
- Fig. 1: is a schematic overview depicting a wireless communication network

- Fig. 2: shows a combined flowchart and signalling scheme

- Fig. 3: shows a combined flowchart and signalling scheme

- Fig. 4: is a flowchart
- Fig. 5: is a flowchart
- Fig. 6: is a block diagram depicting a UE
- Fig. 7: is a block diagram depicting a communication node

- Fig. 8: shows a telecommunication network connected via an intermediate network to a host computer
- Fig. 9: shows a host computer communicating via a base station with a user equipment over a partially wireless connection
- Fig. 10: shows methods implemented in a communication system including a host computer, a base station and a user equipment

- Fig. 11: shows methods implemented in a communication system including a host computer, a base station and a user equipment

- Fig. 12: shows methods implemented in a communication system including a host computer, a base station and a user equipment and
- Fig. 13: shows methods implemented in a communication system including a host computer, a base station and a user equipment

### DETAILED DESCRIPTION

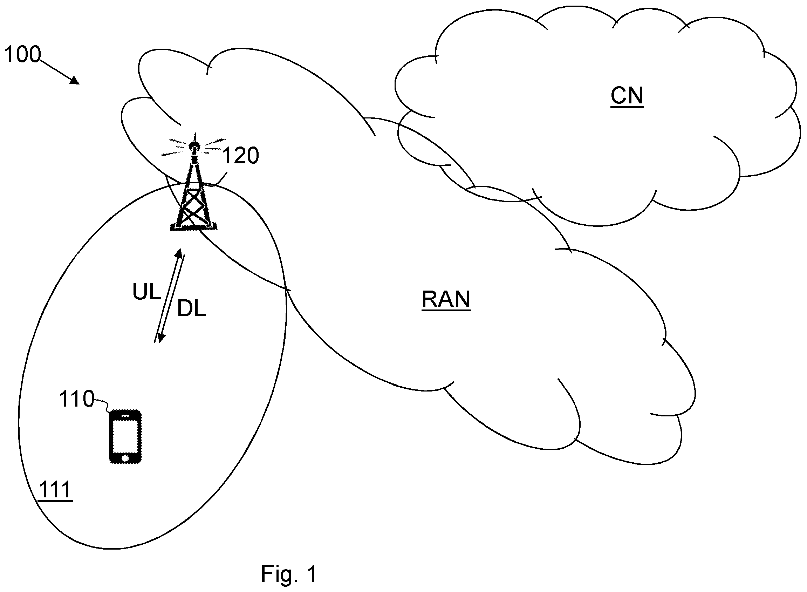

Embodiments herein relate to wireless communication networks in general. Fig. 1 is a schematic overview depicting **a wireless communication network 100.** The wireless communication network 100 comprises one or more Radio Access Networks (RANs) and one or more Core Networks (CNs). The wireless communication network 100 may use one or a number of different technologies. Embodiments herein relate to recent technology trends that are of particular interest in a 5G or 4G context, however, embodiments are also applicable in further development of existing wireless communication systems such as e.g. Long Term Evolution (LTE) and Wideband Code Division Multiple Access (WCDMA).

In the wireless communication network 100, wireless devices are configured to communicate with the RAN or with one another device over a sidelink e.g. a User Equipment (UE) 110, such as a communication device. It should be understood by the skilled in the art that "UE" is a non-limiting term which means any terminal, wireless communication terminal, wireless device, narrowband-internet of things (NB-IoT) device, Machine Type Communication (MTC) device, Device to Device (D2D) terminal, or node e.g. smart phone, laptop, mobile phone, sensor, relay, mobile tablets or even a small base station capable of communicating using radio communication with a radio network node or a wireless device.

The wireless communication network 100 comprises **a radio network node 120** providing radio coverage over a geographical area, **a service area 111 i.e. a cell,** of a first radio access technology (RAT), such as New Radio (NR), LTE or similar. The radio network node 120 may be a transmission and reception point such as an access node, an access controller, a base station, e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the radio network node 120 depending e.g. on the first radio access technology and terminology used. The radio network node 120 may be referred to as a serving radio network node wherein the service area may be referred to as a serving cell, and the serving network node communicates with the UEs in form of Down Link (DL) transmissions to the UEs and Up Link (UL) transmissions from the UEs. It should be noted that a service area may be denoted as cell, beam, beam group or similar to define an area of radio coverage.

As previously described, the radio network temporary identifier (RNTI) space is limited, but by optimizing the RNTI space for transmissions using preconfigured resources, such as preconfigured uplink resources (PUR), for large volumes of UEs, a functional solution for preconfigured resources is provided without running out of RNTI values for assigning to UEs. Embodiments herein provide solutions for addressing the RNTI limitation by a physical (PHY)-layer solution, and by a higher-layer solution. Thus, the present disclosure provides an efficient manner to enable communication in a wireless communication network 100. This is now going to be described more in detail.

According to a physical layer approach, the available RNTI space for PUR may be optimized by the use of non-backwards compatible transmission schemes, as this enables a reuse of the entire existing RNTI space for PUR transmissions.

In one embodiment, a non-backwards compatible coding scheme is used to distinguish PUR (M/N)PDCCH transmissions from already specified transmission (M/N)PDCCH schemes. The UE may thus transmit to the radio network node 12 an indication, e.g. coding indication, reference signal indication, and/or modulation indication, indicating that the transmission is associated with a PUR transmission.

Examples of non-backwards compatible coding schemes or indications are:
- Use of a new forward error correction (FEC) code (i.e. code which is not currently used for (M/N)PDCCH transmissions according to 3GPP Release 15 specifications), e.g., by means of new convolution code generator polynomials.
- Use of a new interleaver for interleaving the convolutional encoded bits.
- Use of a new cyclic redundancy check (CRC) code (i.e. code which is not currently used for (M/N)PDCCH transmissions according to 3GPP Release 15 specifications), e.g., by means of new generator polynomials for CRC calculation. The new CRC generator polynomials could be chosen to support a CRC length L_{CRC} longer than the current 16 bits.
- Use of a bit level code word that scrambles the encoded bit sequence.

In one embodiment the RNTI length L_{RNTI} is extended beyond 16 bits. If L_{CRC} is also extended to match L_{RNTI} then the extended RNTI can be added modulo 2 across the full CRC length. If L_{RNTI} > L_{CRC} then the RNTI can be added modulo 2 across the CRC and part of the data before FEC encoding is performed.

In one embodiment, a non-backwards compatible modulation scheme, e.g. indication, is used to distinguish PUR (M/N)PDCCH transmissions from already specified transmission (M/N)PDCCH schemes.

Examples of non-backwards compatible modulation schemes are:
- Use of modulation constellation not supported for (M/N)PDCCH transmissions according to the 3GPP Release 15 specifications such as binary phase shift keying (BPSK) or 8PSK.
- Use of a rotation θ of the modulation constellation such as ±π/2 rotated BPSK, or ±π/4 rotated BPSK. The resource elements 1,...,n,...N of a physical resource block (PRB) pair can either be rotated by monotonously increasing or decreasing rotation ±θ·n. The N rotations applied to the resource elements of a PRB pair can also correspond to a pseudo-random sequence of rotations quantized in steps of θ with θ for example determine to ±π/2 or ±π/4. The pseudo-random sequence can be time variant or time-invariant.
- Use of symbol level code word that scrambles the symbol sequence mapped to a PRB pair.

In one embodiment, non-backwards compatible reference symbol transmission schemes are used to distinguish PUR (M/N)PDCCH transmissions from already specified transmission (M/N)PDCCH schemes.

Examples of non-backwards compatible reference symbol transmission schemes or indications are:
- Use of a new reference symbol.

Alternatively or additionally, according to a higher-layer approach, the available RNTI space for PUR may be optimized by the use of contention or contention free identities. The higher-layer solution optimizing the available RNTI space for PUR is now going to be described.

In legacy Random Access (RA) procedure, and in Rel-15 Early Data Transmission (EDT), contention resolution is applied. That is, several UEs may choose the same RA preamble and contention resolution is required to resolve the contention and provide a dedicated connection to a UE. The contention resolution works in the following way: the UE includes a UE_ID in Msg3 transmission. The eNB may receive multiple Msg3 transmissions from contending UEs, which have selected the same RA preamble, or a single Msg3 transmission which is from the UE with the strongest signal, and will reply including the UE Contention Resolution Identity MAC Control Element (see 3GPP TS 36.321, v15.5.0, March 2019, section 6.1.3.4) corresponding to the uplink transmission of the UE winning the contention. A UE which receives its own UE_ID and matching UE *Contention Resolution Identity* MAC Control Element will therefore conclude that it has won the contention resolution and continue the procedure, whereas a UE that receives a *UE Contention Resolution Identity* MAC Control Element with a non-matching content will conclude that it lost the contention as start over the RA procedure. The contention resolution mechanism is explained in 3GPP TS 36.321, v15.5.9, March 2019, section 5.1.5. In the below, the uplink PUR message corresponds to Msg3.

As previously explained, there are limited number of RNTI values available, 2^16=65536 in total but the RNTI space is already separated in different parts for reserved use, and for PUR this is especially problematic since RNTI will have to be assigned long term to UEs in RRC_IDLE mode. In legacy, the dedicated RNTIs, such as C-RNTI, are only used during a relatively short time during the time in RRC_CONNECTED. For PUR, RNTIs have to be assigned to UEs in Idle, which UEs may even have left the cell. In RRC_CONNECTED, eNB could release UEs to RRC_IDLE in case RNTI space is exhausted, but for PUR this would take time, i.e. the eNB may have to wait until the next PUR occasion.

According to this embodiment, the idea is to make the use of contention resolution configurable. That is, in the PUR configuration provided to the UE 110 over dedicated RRC signaling it will be configured which of the following options will be used for PUR: No contention resolution: The UE considers the RNTI to be unique and that User-specific (M/N)PDCCH Search Space (USS) is used. Contention resolution is not required since both the PUR resource for the uplink transmission, corresponding to EDT Msg3, is UE-specific and there is not risk of RNTI collision with another UE. Hence, the *UE Contention Resolution Identity MAC CE* does not have to be included in the downlink PUR RRC message and therefore the message size would be reduced by 48-bits for the DL message. Possibly the UE_ID or ResumelD can also be omitted in Msg3 in some cases, e.g. if not needed for security, see example a. below. If one (PUR) RNTI value is assigned to multiple UEs, the network in this case ensures that there is no overlap in the search space, in time or frequency, for those UEs for this to work, including the possibility for the maximum number of HARQ retransmissions. It would be up to network/eNB implementation in this case to provide contention-free PUR transmissions.
a. In this embodiment, the UE would not explicitly transmit UE identifier in the uplink message. This is a different mechanism compared to legacy cases, where UE ID is included in the RRC message transmitted in Msg3. It is up to the network, e.g. eNB, to identify the UE e.g. based on the time/frequency resources the UE uses to send the uplink PUR message. If the UE ID is not transmitted, the uplink message size can be smaller compared to the legacy cases. Possibly this could also include the ResumelD for CloT UP-optimization.
b. In one embodiment, "no contention resolution" can be implicitly configured with the configuration of USS for PUR transmission.

Contention resolution: The UE considers the RNTI to be shared and that Common (M/N)PDCCH Search Space (CSS) is used. Contention resolution is required since although the PUR resource for the uplink transmission (corresponding to EDT Msg3) is UE-specific there is a risk of RNTI collision with another UE. Hence, *UE Contention Resolution Identity MAC CE* is included in the downlink PUR message, and if omitted in no contention resolution. The UE_ID shall be included in the uplink RRC message. The use of contention resolution allows the network to be more flexible in the search space configuration and RNTI allocation. It allows the network to have overlapping search spaces also for UEs which share the same (PUR) RNTI value. This allows the PUR resource configuration to be more dense if an RNTI value can be reused in time domain. For example, only the search space after the initial PUR transmission could be non-overlapping and in the case of HARQ transmission, any RNTI conflict would be resolved by the contention resolution mechanism.

In one embodiment, contention resolution can be implicitly configured with the configuration of CSS for PUR transmission.

In an alternative embodiment, the main idea is not the configurability, but the procedure outlined in non-contention resolution.

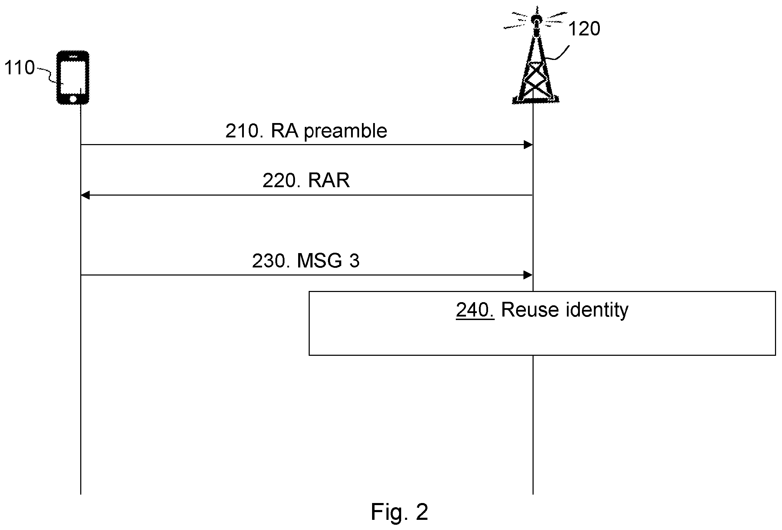

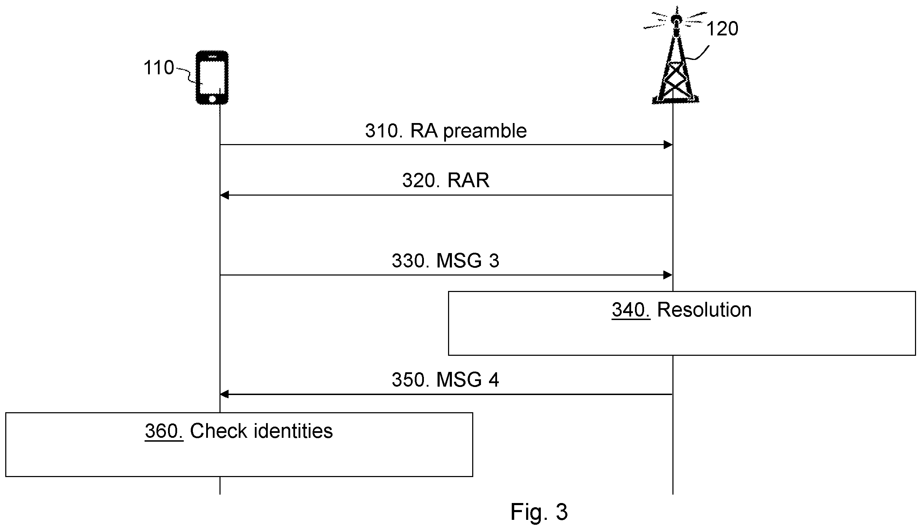

Embodiments of the present disclosure is now going to be described with reference to **Fig. 2** and **Fig. 3****.**

**Fig. 2** is a combined signalling scheme and flowchart according to embodiments herein and illustrates the signaling between a UE 110 and a radio network node 120 according to some embodiments of the present disclosure.

**Action 210.** The UE 110 may transmit to the radio network node 120 a random access request such as a random access preamble indicating a transmission or to connect.

**Action 220.** The radio network node 120 may check the RA preamble and respond with e.g. a random access response (RAR) to the UE

**Action 230.** The UE 110 may then transmit a PUR message, such as a MSG3, to the radio network node indicating that the message is associated with PUR configuration.

**Action 240.** The radio network node 120 may then reuse identity for PUR transmissions.

**Fig. 3** is a combined signalling scheme and flowchart according to embodiments herein and illustrates the signaling between a UE 110 and a radio network node 120 according to some embodiments of the present disclosure.

**Action 310.** The UE 110 may transmit to the radio network node 120 a random access request such as a random access preamble indicating a transmission or to connect.

**Action 320.** The radio network node 120 checks and responds with e.g. a random access response (RAR) to the UE 110.

**Action 330.** The UE 110 may then transmit a PUR message such as a MSG3 to the radio network node with UE identity such as Temporary RNTI.

**Action 340.** The radio network node 120 may then perform a resolution to resolve an eventual collision between two UEs attempting to access the network. For example, the radio network node 120 maps the UE identity to a contention identity such as a RNTI of the UE 110 e.g. taking the signal strength or quality or time to access into account.

**Action 350.** The radio network node 120 then responds to the UE 110 with the contention identity such as a RNTI unique for the UE 110, e.g. message 4.

**Action 360.** The UE 110 then check the contention identity in the message.

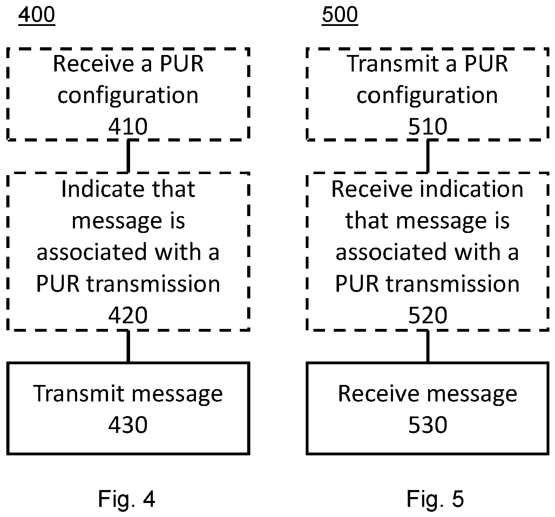

**Fig. 4** is a flowchart illustrating a method 400 according to an aspect of the present disclosure. The method 400 is performed by a UE 110 for controlling communication in a wireless communication network 100 using preconfigured resources. The preconfigured resources may be PUR.

The method 400, according to the claimed embodiment, starts with step 410 of receiving, from the network node 120, a PUR configuration indicating whether the UE 110 is to use a contention free or contention resolution procedure for the PUR transmission to the radio network node 120. Thus, the UE 110 may receive a configuration which indicates to the UE 110 what kind of procedure that the UE 110 is to use for the transmissions to the radio network node 110. The PUR configuration may indicate that the UE 110 is to use a contention resolution procedure by configuration of CSS. Alternatively, the PUR configuration may indicate that the UE 110 is to use a contention free procedure by configuration of USS. This has previously been described more in detail with reference to the higher layer approach.

The method 400, according to the claimed embodiment, further comprises step 420 of indicating, to the radio network node 120, that the message is associated with a PUR transmission. The indication comprises at least one of a coding indication, a reference signal indication and a modulation indication. The PUR differentiation may be performed based on the use of these non-legacy parameters/options. The indication may, according to some embodiments, be implicit, and using other coding and physical layer details. The indication may then not be in any message. This has previously been described more in detail with reference to the physical layer approach.

The method 400 comprises step 430 of transmitting a message to the radio network node 120 using the preconfigured resources, wherein the UE 110 is to be identified by the radio network node 120 based on the message. The UE 110 is to be identified by the radio network node 120 based on characteristics associated with the message. An identification of the UE 110 is further associated with at least one of a preconfigured resource configuration and an indication that the message is associated with a preconfigured resource transmission. The preconfigured resource configuration and/or the indication that the message is associated with a preconfigured resource transmission is/are associated with how the UE 110 will be identified by the message, or characteristics associated with the message. Thus, the identification of the UE 110 is associated with at least one of the configuration and the indication and based on these, the radio network node 120 will know how to identify the UE 110 based on the message. By identifying the UE 110 based on the message, it may be assured that the limited RNTI space may be optimized.

As previously described, depending on which approach/es that is/are used for optimizing the available RNTI space, the UE 110 may be identified in different ways based on the message, or based on different characteristics, or properties, associated with the message. The characteristics associated with the message may be, for example, information comprised in the message or resources used when transmitting the message. In some embodiments, the UE 110 is identified based on a RNTI associated with the transmitted message. As previously described, this may be the case when, for example, using the physical layer approach and/or the contention resolution procedure of the higher layer approach. The physical layer approach may be associated with an indication that the message is associated with a preconfigured resource transmission and the higher layer approach may be associated with a preconfigured resource configuration. Alternatively, or additionally, the UE 110 is identified based on at least one of used time resources and used frequency resources of the transmitted message. As described above, this may be the case when, for example, using the contention free procedure of the higher layer approach, which may be associated with a preconfigured resource configuration.

The described method 400 addresses the problem of RNTI limitation by optimizing the RNTI space for PUR transmission for large volumes of UEs. That is, the described method 400 allows a functional solution for PUR without running out of RNTI values for assigning to UEs. Thus, it is provided an efficient manner to enable communication in the wireless communication network 100.

**Fig. 5** is a flowchart illustrating the method 500 according to another aspect. The method 500 is performed by a radio network node 120 for controlling communication in a wireless communication network 100 using preconfigured resources. The preconfigured resources may be PUR.

The method 500 may, according to some embodiments, start with step 510 of transmitting, to the UE, a PUR configuration indicating whether the UE is to use a contention free or contention resolution procedure for the PUR transmission to the radio network node. Thus, the network node 120 may transmit a configuration which indicates to the receiving UE 110 what kind of procedure that the UE 110 is to use for the transmissions to the radio network node 120. The PUR configuration may indicate that the UE 110 is to use a contention resolution procedure by configuration of CSS. Alternatively, the PUR configuration may indicate that the UE 110 is to use a contention free procedure by configuration of USS. This has been described more in detail previously with reference to the higher layer approach.

In the claimed embodiment, the method 500 comprises step 520 of receiving, from the UE 110, an indication that the message is associated with a PUR transmission. The indication comprises at least one of a coding indication, a reference signal indication and a modulation indication. This has previously been described more in detail with reference to the physical layer approach.

The method comprises step 530 of receiving a message from a UE 110 using the preconfigured resources, wherein the UE 110 is identified based on the message. The UE 110 is identified based on characteristics associated with the message. The identification of the UE 110 is further associated with at least one of a preconfigured resource configuration and an indication that the message is associated with a preconfigured resource transmission. The configuration and/or the indication may identify how the UE 110 is identified by the message, or characteristics associated with the message. Thus, based on at least one of the configuration and the indication, the radio network node 120 may know how to identify of the UE 110 based on the message. By identifying the UE 110 based on the message, it may be assured that the limited RNTI space may be optimized.

As previously described, depending on which approach/es that is/are used for optimizing the available RNTI space, the UE 110 may be identified in different ways based on the message, or based on different characteristics, or properties, associated with the message. The characteristics associated with the message may be, for example, information comprised in the message or resources used when transmitting the message. In some embodiments, the UE 110 is identified based on a RNTI associated with the transmitted message. As described above, this may be the case when, for example, using the physical layer approach and/or the contention resolution procedure of the higher layer approach. Alternatively, or additionally, the UE 110 is identified based on at least one of used time resources and used frequency resources of the transmitted message. As described above, this may be the case when, for example, using the contention free procedure of the higher layer approach.

The described method 500 addresses the problem of RNTI limitation by optimizing the RNTI space for PUR transmission for large volumes of UEs. That is, the described method 400 allows a functional solution for PUR without running out of RNTI values for assigning to UEs. Thus, it is provided an efficient manner to enable communication in the wireless communication network 100.

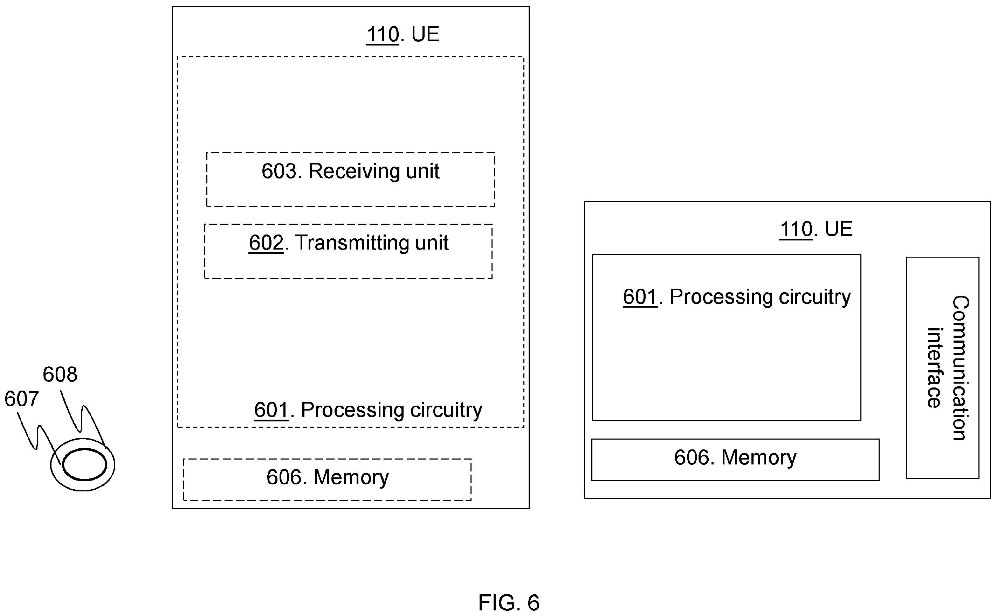

**Fig. 6** is a block diagram depicting the UE 110 for handling communication according to embodiments herein.

The UE 110 may comprise **processing circuitry 601,** e.g. one or more processors, configured to perform the methods herein.

The UE 110 may comprise a **transmitting unit 602.** The UE 110, the processing circuitry 601, and/or the transmitting unit 602 may be configured to transmit a message to the radio network node 120 using preconfigured resources. The UE 110 is to be identified by the radio network node 120 based on the message and based on at least one of a preconfigured resource configuration and an indication that the message is associated with a preconfigured resource transmission. The transmitting unit 602 may further be configured to indicate, to the radio network node 120, that the transmission is associated with a PUR configuration.

The UE 110 may comprise **a receiving unit 603.** The UE 110, the processing circuitry 601, and/or the receiving unit 603 may be configured to receive a message from the radio network node 120 indicating identity, configuration of contention resolution or not and/or resources for PUR transmissions.

The UE 110 further comprises **a memory 606.** The memory comprises one or more units to be used to store data on, such as CRC, FEC, configuration modulation, reference signal configuration, applications to perform the methods disclosed herein when being executed, and similar. The UE 110 may comprise a communication interface e.g. one or more antennas.

The methods according to the embodiments described herein for the UE 110 are respectively implemented by means of e.g. **a computer program product 607** or a computer program, comprising instructions, i.e., software code portions, which, when executed on at least one processor, cause the at least one processor to carry out the actions described herein, as performed by the UE 110. The computer program product 607 may be stored on **a computer-readable storage medium 608,** e.g. a disc, a universal serial bus (USB) stick or similar. The computer-readable storage medium 608, having stored thereon the computer program, may comprise the instructions which, when executed on at least one processor, cause the at least one processor to carry out the actions described herein, as performed by the UE 110. In some embodiments, the computer-readable storage medium may be a transitory or a non-transitory computer-readable storage medium.

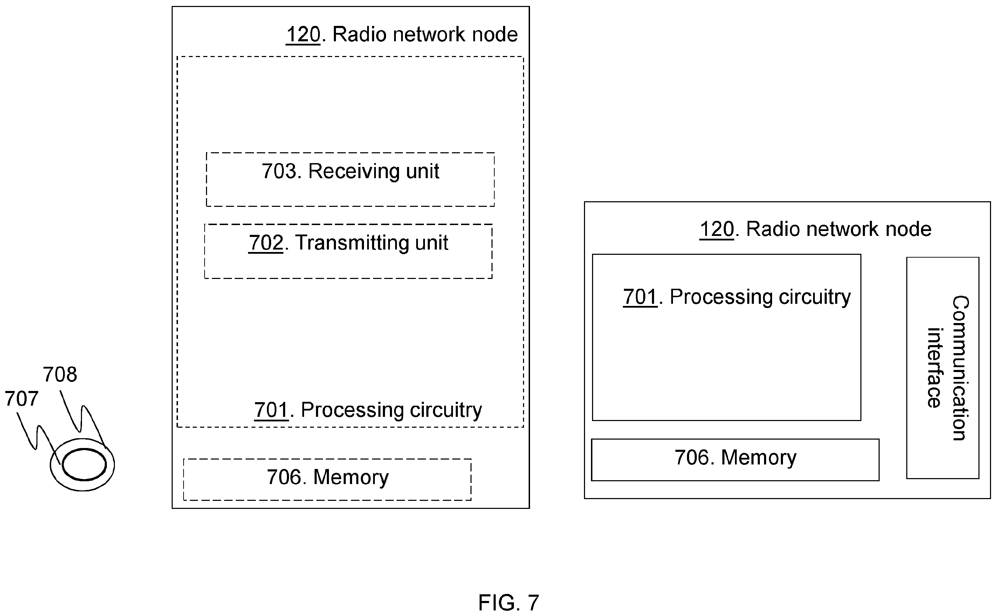

**Fig. 7** is a block diagram depicting the radio network node 120 for handling communication according to embodiments herein.

The radio network node 120 may comprise **processing circuitry 701,** e.g. one or more processors, configured to perform the methods herein.

The radio network node 120 may comprise **a transmitting unit 702.** The radio network node 120, the processing circuitry 701, and/or the transmitting unit 702 may be configured to transmit contention configuration to the UE 110.

The radio network node 120 may comprise **a selecting unit 703.** The radio network node 120, the processing circuitry 701, and/or the selecting unit 703 may be configured to select identity based on received indication and/or other transmission parameter such as signal strength or time.

The radio network node 120 may comprise **a receiving unit 705.** The radio network node 120, the processing circuitry 701, and/or the receiving unit 705 may be configured to receive a message from the UE 110, wherein the UE 110 is identified based on the message and based on at least one of a preconfigured resource configuration and an indication that the message is associated with a preconfigured resource transmission. The radio network node 120, the processing circuitry 701, and/or the receiving unit 705 may be configured to receive a message indicating whether the transmission is associated with PUR or not.

The communication node 100 further comprises **a memory 706.** The memory comprises one or more units to be used to store data on, such as configuration, indication, identities such as RNTIs, applications to perform the methods disclosed herein when being executed, and similar. The radio network node 120 may comprise a communication interface e.g. one or more antennas.

The methods according to the embodiments described herein for the radio network node 120 are respectively implemented by means of e.g. **a computer program product 707** or a computer program, comprising instructions, i.e., software code portions, which, when executed on at least one processor, cause the at least one processor to carry out the actions described herein, as performed by the radio network node 120. The computer program product 707 may be stored on **a computer-readable storage medium 708,** e.g. a disc, a universal serial bus (USB) stick or similar. The computer-readable storage medium 708, having stored thereon the computer program, may comprise the instructions which, when executed on at least one processor, cause the at least one processor to carry out the actions described herein, as performed by the radio network node 120. In some embodiments, the computer-readable storage medium may be a transitory or a non-transitory computer-readable storage medium.

In some embodiments, a more general term "radio network node" is used and it can correspond to any type of radio-network node or any network node, which communicates with a wireless device and/or with another network node. Examples of network nodes are NodeB, MeNB, SeNB, a network node belonging to Master cell group (MCG) or Secondary cell group (SCG), base station (BS), multi-standard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments, the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any RAT or multi-RAT systems, where the wireless device receives and/or transmit signals (e.g. data) e.g. New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or units may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

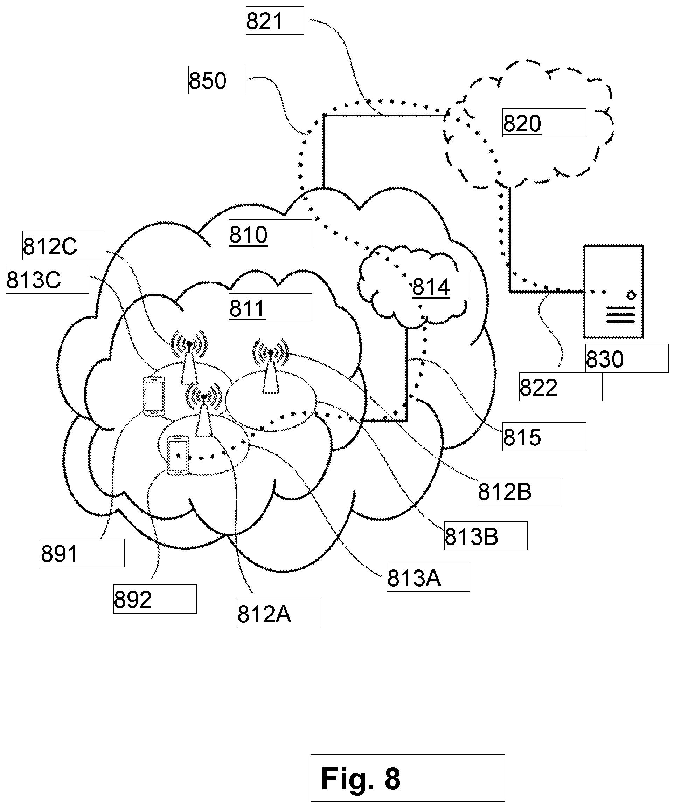

**Fig. 8****:** Telecommunication network connected via an intermediate network to a host computer in accordance with some embodiments

With reference to Fig. 8, in accordance with an embodiment, a communication system includes telecommunication network 810, such as a 3GPP-type cellular network, which comprises access network 811, such as a radio access network, and core network 814. Access network 811 comprises a plurality of base stations 812a, 812b, 812c, such as NBs, eNBs, gNBs or other types of wireless access points being examples of the radio network node 12 above, each defining a corresponding coverage area 813a, 813b, 813c. Each base station 812a, 812b, 812c is connectable to core network 814 over a wired or wireless connection 815. A first UE 891 located in coverage area 813c is configured to wirelessly connect to, or be paged by, the corresponding base station 812c. A second UE 892 in coverage area 813a is wirelessly connectable to the corresponding base station 812a. While a plurality of UEs 891, 892 are illustrated in this example being examples of the UE 10 above, the disclosed embodiments are equally applicable to a situation where a sole UE is in the coverage area or where a sole UE is connecting to the corresponding base station 812.

Telecommunication network 810 is itself connected to host computer 830, which may be embodied in the hardware and/or software of a standalone server, a cloud-implemented server, a distributed server or as processing resources in a server farm. Host computer 830 may be under the ownership or control of a service provider, or may be operated by the service provider or on behalf of the service provider. Connections 821 and 822 between telecommunication network 810 and host computer 830 may extend directly from core network 814 to host computer 830 or may go via an optional intermediate network 820. Intermediate network 820 may be one of, or a combination of more than one of, a public, private or hosted network; intermediate network 820, if any, may be a backbone network or the Internet; in particular, intermediate network 820 may comprise two or more sub-networks (not shown).

The communication system of Fig. 8 as a whole enables connectivity between the connected UEs 891, 892 and host computer 830. The connectivity may be described as an over-the-top (OTT) connection 850. Host computer 830 and the connected UEs 891, 892 are configured to communicate data and/or signaling via OTT connection 850, using access network 811, core network 814, any intermediate network 820 and possible further infrastructure (not shown) as intermediaries. OTT connection 850 may be transparent in the sense that the participating communication devices through which OTT connection 850 passes are unaware of routing of uplink and downlink communications. For example, base station 812 may not or need not be informed about the past routing of an incoming downlink communication with data originating from host computer 830 to be forwarded (e.g., handed over) to a connected UE 891. Similarly, base station 812 need not be aware of the future routing of an outgoing uplink communication originating from the UE 891 towards the host computer 830.

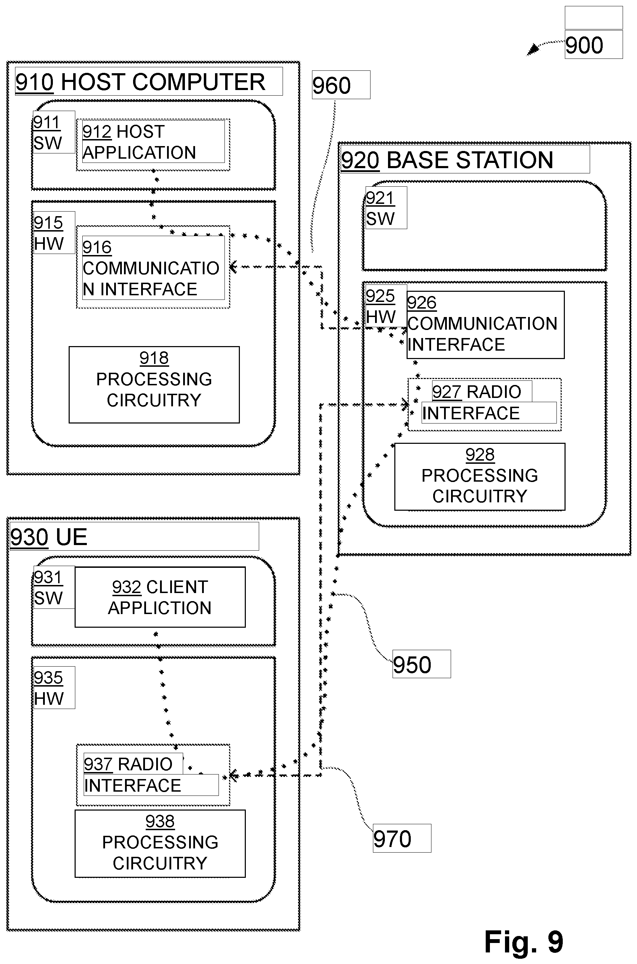

**Fig. 9****:** Host computer communicating via a base station with a user equipment over a partially wireless connection in accordance with some embodiments

Example implementations, in accordance with an embodiment, of the UE, base station and host computer discussed in the preceding paragraphs will now be described with reference to Fig. 9. In communication system 900, host computer 910 comprises hardware 915 including communication interface 916 configured to set up and maintain a wired or wireless connection with an interface of a different communication device of communication system 900. Host computer 910 further comprises processing circuitry 918, which may have storage and/or processing capabilities. In particular, processing circuitry 918 may comprise one or more programmable processors, application-specific integrated circuits, field programmable gate arrays or combinations of these (not shown) adapted to execute instructions. Host computer 910 further comprises software 911, which is stored in or accessible by host computer 910 and executable by processing circuitry 918. Software 911 includes host application 912. Host application 912 may be operable to provide a service to a remote user, such as UE 930 connecting via OTT connection 950 terminating at UE 930 and host computer 910. In providing the service to the remote user, host application 912 may provide user data which is transmitted using OTT connection 950.

Communication system 900 further includes base station 920 provided in a telecommunication system and comprising hardware 925 enabling it to communicate with host computer 910 and with UE 930. Hardware 925 may include communication interface 926 for setting up and maintaining a wired or wireless connection with an interface of a different communication device of communication system 900, as well as radio interface 927 for setting up and maintaining at least wireless connection 970 with UE 930 located in a coverage area (not shown in Fig. 9) served by base station 920. Communication interface 926 may be configured to facilitate connection 960 to host computer 910. Connection 960 may be direct or it may pass through a core network (not shown in Fig. 9) of the telecommunication system and/or through one or more intermediate networks outside the telecommunication system. In the embodiment shown, hardware 925 of base station 920 further includes processing circuitry 928, which may comprise one or more programmable processors, application-specific integrated circuits, field programmable gate arrays or combinations of these (not shown) adapted to execute instructions. Base station 920 further has software 921 stored internally or accessible via an external connection.

Communication system 900 further includes UE 930 already referred to. Its hardware 935 may include radio interface 937 configured to set up and maintain wireless connection 970 with a base station serving a coverage area in which UE 930 is currently located. Hardware 935 of UE 930 further includes processing circuitry 936, which may comprise one or more programmable processors, application-specific integrated circuits, field programmable gate arrays or combinations of these (not shown) adapted to execute instructions. UE 930 further comprises software 931, which is stored in or accessible by UE 930 and executable by processing circuitry 936. Software 931 includes client application 932. Client application 932 may be operable to provide a service to a human or non-human user via UE 930, with the support of host computer 910. In host computer 910, an executing host application 912 may communicate with the executing client application 932 via OTT connection 950 terminating at UE 930 and host computer 910. In providing the service to the user, client application 932 may receive request data from host application 912 and provide user data in response to the request data. OTT connection 950 may transfer both the request data and the user data. Client application 932 may interact with the user to generate the user data that it provides.

It is noted that host computer 910, base station 920 and UE 930 illustrated in Fig. 9 may be similar or identical to host computer 830, one of base stations 812a, 812b, 812c and one of UEs 891, 892 of Fig. 8, respectively. This is to say, the inner workings of these entities may be as shown in Fig. 9 and independently, the surrounding network topology may be that of Fig. 8.

In Fig. 9, OTT connection 950 has been drawn abstractly to illustrate the communication between host computer 910 and UE 930 via base station 920, without explicit reference to any intermediary devices and the precise routing of messages via these devices. Network infrastructure may determine the routing, which it may be configured to hide from UE 930 or from the service provider operating host computer 910, or both. While OTT connection 950 is active, the network infrastructure may further take decisions by which it dynamically changes the routing (e.g., on the basis of load balancing consideration or reconfiguration of the network).

Wireless connection 970 between UE 930 and base station 920 is in accordance with the teachings of the embodiments described throughout this disclosure. One or more of the various embodiments improve the performance of OTT services provided to UE 930 using OTT connection 950, in which wireless connection 970 forms the last segment. More precisely, the teachings of these embodiments may improve the latency since the identities may be used in a more efficient manner and thereby provide benefits such as reduced waiting time and better responsiveness.

A measurement procedure may be provided for the purpose of monitoring data rate, latency and other factors on which the one or more embodiments improve. There may further be an optional network functionality for reconfiguring OTT connection 950 between host computer 910 and UE 930, in response to variations in the measurement results. The measurement procedure and/or the network functionality for reconfiguring OTT connection 950 may be implemented in software 911 and hardware 915 of host computer 910 or in software 931 and hardware 935 of UE 930, or both. In embodiments, sensors (not shown) may be deployed in or in association with communication devices through which OTT connection 950 passes; the sensors may participate in the measurement procedure by supplying values of the monitored quantities exemplified above, or supplying values of other physical quantities from which software 911, 931 may compute or estimate the monitored quantities. The reconfiguring of OTT connection 950 may include message format, retransmission settings, preferred routing etc.; the reconfiguring need not affect base station 920, and it may be unknown or imperceptible to base station 920. Such procedures and functionalities may be known and practiced in the art. In certain embodiments, measurements may involve proprietary UE signaling facilitating host computer 910's measurements of throughput, propagation times, latency and the like. The measurements may be implemented in that software 911 and 931 causes messages to be transmitted, in particular empty or 'dummy' messages, using OTT connection 950 while it monitors propagation times, errors etc.

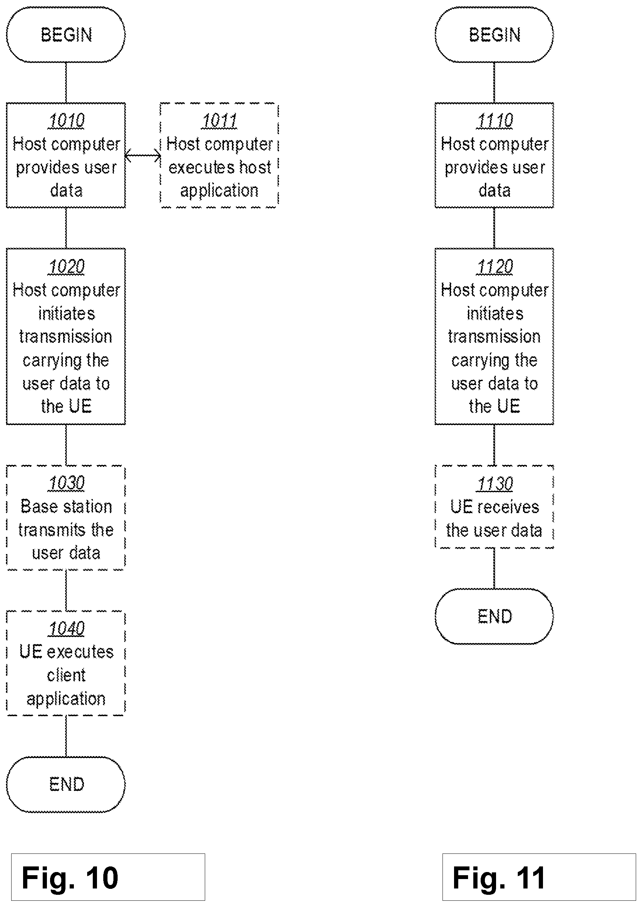

**Fig. 10****:** Methods implemented in a communication system including a host computer, a base station and a user equipment in accordance with some embodiments.

Fig. 10 is a flowchart illustrating a method implemented in a communication system, in accordance with one embodiment. The communication system includes a host computer, a base station and a UE which may be those described with reference to Fig. 8 and 9. For simplicity of the present disclosure, only drawing references to Fig. 10 will be included in this section. In step 1010, the host computer provides user data. In substep 1011 (which may be optional) of step 1010, the host computer provides the user data by executing a host application. In step 1020, the host computer initiates a transmission carrying the user data to the UE. In step 1030 (which may be optional), the base station transmits to the UE the user data which was carried in the transmission that the host computer initiated, in accordance with the teachings of the embodiments described throughout this disclosure. In step 1040 (which may also be optional), the UE executes a client application associated with the host application executed by the host computer.

**Fig. 11****:** Methods implemented in a communication system including a host computer, a base station and a user equipment in accordance with some embodiments.

Fig. 11 is a flowchart illustrating a method implemented in a communication system, in accordance with one embodiment. The communication system includes a host computer, a base station and a UE which may be those described with reference to Fig. 8 and 9. For simplicity of the present disclosure, only drawing references to Fig. 11 will be included in this section. In step 1110 of the method, the host computer provides user data. In an optional substep (not shown) the host computer provides the user data by executing a host application. In step 1120, the host computer initiates a transmission carrying the user data to the UE. The transmission may pass via the base station, in accordance with the teachings of the embodiments described throughout this disclosure. In step 1130 (which may be optional), the UE receives the user data carried in the transmission.

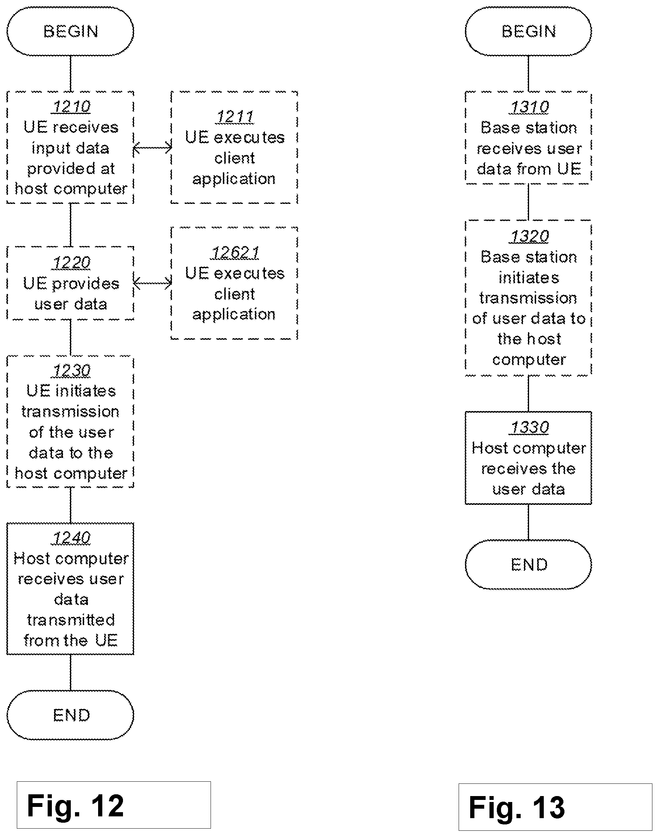

**Fig. 12****:** Methods implemented in a communication system including a host computer, a base station and a user equipment in accordance with some embodiments.

Fig. 12 is a flowchart illustrating a method implemented in a communication system, in accordance with one embodiment. The communication system includes a host computer, a base station and a UE which may be those described with reference to Fig. 8 and 9. For simplicity of the present disclosure, only drawing references to Fig. 12 will be included in this section. In step 1210 (which may be optional), the UE receives input data provided by the host computer. Additionally or alternatively, in step 1220, the UE provides user data. In substep 1221 (which may be optional) of step 1220, the UE provides the user data by executing a client application. In substep 1211 (which may be optional) of step 1210, the UE executes a client application which provides the user data in reaction to the received input data provided by the host computer. In providing the user data, the executed client application may further consider user input received from the user. Regardless of the specific manner in which the user data was provided, the UE initiates, in substep 1230 (which may be optional), transmission of the user data to the host computer. In step 1240 of the method, the host computer receives the user data transmitted from the UE, in accordance with the teachings of the embodiments described throughout this disclosure.

**Fig. 13****:** Methods implemented in a communication system including a host computer, a base station and a user equipment in accordance with some embodiments.

Fig. 13 is a flowchart illustrating a method implemented in a communication system, in accordance with one embodiment. The communication system includes a host computer, a base station and a UE which may be those described with reference to Fig. 8 and 9. For simplicity of the present disclosure, only drawing references to Fig. 13 will be included in this section. In step 1310 (which may be optional), in accordance with the teachings of the embodiments described throughout this disclosure, the base station receives user data from the UE. In step 1320 (which may be optional), the base station initiates transmission of the received user data to the host computer. In step 1330 (which may be optional), the host computer receives the user data carried in the transmission initiated by the base station.

Modifications and other embodiments of the disclosed embodiments will come to mind to one skilled in the art having the benefit of the teachings presented in the foregoing descriptions and the associated drawings. Although specific terms may be employed herein, they are used in a generic and descriptive sense only and not for purposes of limitation.

| Abbreviation | Explanation |
|---|---|
| 3GPP | 3rd Generation Partnership Project |
| BI | Backoff Indicator |
| BSR | Buffer Status Report |
| Cat-M1 | Category M1 |
| Cat-M2 | Category M2 |
| CE | Coverage Enhanced / Enhancement or (MAC) Control Element |
| CRC | Cyclic Redundancy Check |
| DL | Downlink |
| D-PUR | Dedicated Preconfigured Uplink Resources |
| eMTC | enhanced Machine-Type Communications |
| eNB | Evolved NodeB |
| EDT | Early Data Transmission |
| loT | Internet of Things |
| LTE | Long-Term Evolution |
| MAC | Medium Access Control |
| NAS | Non-Access Stratum |
| NB-loT | Narrowband Internet of Things |
| M2M | Machine-to-Machine |
| MTC | Machine-Typ Communications |
| PDCCH | Physical Downlink Control Channel |
| PDU | Protocol Data Unit |
| PUR | Preconfigured Uplink Resources (N)PRACH(Narrowband) Physical Random Access Channel |
| PRB | Physical Resource Block |
| RA | Random Access |
| RAPID | Random Access Preamble IDentifier |
| RAR | Random Access Response |
| RNTI | Radio Network Temporary Identifier |
| RRC | Radio Resource Control (protocol) |
| TBS | Transport Block Size |
| UL | Uplink |

### References

[1] 3GPP, TS 36.331, "RRC protocol specification"; v15.2.2, June 2018.

## Claims

1. A method (400) performed by a User Equipment, UE, (110) for controlling communication to a radio network node (120) in a wireless communication network (100) using preconfigured resources, wherein the method (400) comprises:
receiving (410) a preconfigured resource configuration from the radio network node (120), wherein the preconfigured resource configuration indicates whether the UE (110) is to use a contention free or a contention resolution procedure for a preconfigured resource transmission to the radio network node (120) using the preconfigured resources which are specific for the UE (110); and/or
transmitting an indication (420) to the radio network node (120) that a message to the radio network node (120) is associated with a preconfigured resource transmission using the preconfigured resources, wherein the indication comprises at least one of a coding scheme indication, a reference symbol transmission scheme indication and a modulation scheme indication; and
transmitting (430) a message to the radio network node (120) using the preconfigured resources, wherein the UE (110) is to be identified by the radio network node (120) based on the message and wherein an identification of the UE (110) further is associated with at least one of:
the preconfigured resource configuration; and
the indication.

2. The method (400) according to claim 1, wherein the preconfigured resources are Preconfigured Uplink Resources, PUR.

3. The method (400) according to any of claim 1 and 2, wherein the UE (110) is identified based on a Radio Network Temporary Identifier, RNTI, associated with the transmitted message.

4. The method (400) according to any of the previous claims, wherein the UE (110) is identified based on at least one of used time and used frequency resources of the transmitted message.

5. The method (400) according to claim 1, wherein the preconfigured resource configuration indicates that the UE (110) is to use a contention resolution procedure by configuration of Common (M/N)PDCCH Search Space, CSS.

6. The method (400) according to claim 1, wherein the preconfigured resource configuration indicates that the UE (110) is to use a contention free procedure by configuration of User-specific (M/N)PDCCH Search Space, USS.

7. A method (500) performed by a radio network node (120) for controlling communication in a wireless communication network (100) using preconfigured resources, the method (500) comprising:
receiving (530) a message from a User Equipment, UE, (110), using the preconfigured resources, wherein the UE (110) is identified based on the message and wherein the identification of the UE (110) further is associated with at least one of:
a preconfigured resource configuration, wherein the preconfigured resource configuration indicates whether the UE (110) is to use a contention free or a contention resolution procedure for the preconfigured resource transmission to the radio network node (120) using the preconfigured resources which are specific for the UE (110); and
an indication, received from the UE (110), that the message is associated with a preconfigured resource transmission, wherein the indication comprises at least one of a coding scheme indication, a reference symbol transmission scheme indication and a modulation scheme indication.

8. The method (500) according to claim 7, wherein the preconfigured resources are Preconfigured Uplink Resources, PUR.

9. The method (500) according to any of claim 7 and 8, wherein the UE (110) is identified based on a Radio Network Temporary Identifier, RNTI, associated with the transmitted message.

10. The method (500) according to any of claim 7 to 9, wherein the UE (110) is identified based on at least one of a used time resource and frequency resource of the transmitted message.

11. The method (500) according to claim 7, wherein the preconfigured resource configuration indicates that the UE (110) is to use a contention resolution procedure by configuration of Common (M/N)PDCCH Search Space, CSS.

12. The method (500) according to claim 7, wherein the preconfigured resource configuration indicates that the UE (110) is to use a contention free procedure by configuration of User-specific (M/N)PDCCH Search Space, USS.

13. A User Equipment, UE, (110) for controlling communication to a radio network node (120) in a wireless communication network (100), using preconfigured resources, wherein the UE (110) is configured to:
receive a preconfigured resource configuration from the radio network node (120), wherein the preconfigured resource configuration indicates whether the UE (110) is to use a contention free or a contention resolution procedure for a preconfigured resource transmission of a message to the radio network node (120) using the preconfigured resources which are specific for the UE (110); and/or
transmit an indication to the radio network node (120) that a message to the radio network node (120) is associated with a preconfigured resource transmission using the preconfigured resources, wherein the indication comprises at least one of a coding scheme indication, a reference symbol transmission scheme indication and a modulation scheme indication; and
transmit a message to a radio network node (120) using the preconfigured resources, wherein the UE (110) is to be identified by the radio network node (120) based on the message and wherein an identification of the UE (110) further is associated with at least one of:
the preconfigured resource configuration; and
the indication.

14. A radio network node (120) for controlling communication in a wireless communication network (100) using preconfigured resources, wherein the network node (120) is configured to:
receive a message from a User Equipment, UE, (110), using the preconfigured resources, wherein the UE (110) is identified based on the message and wherein an identification of the UE (110) further is associated with at least one of:
a preconfigured resource configuration, wherein the preconfigured resource configuration indicates whether the UE (110) is to use a contention free or a contention resolution procedure for the preconfigured resource transmission to the radio network node (120) using the preconfigured resources which are specific for the UE (110); and
an indication, received from the UE (110), that the message is associated with a preconfigured resource transmission, wherein the indication comprises at least one of a coding scheme indication, a reference symbol transmission scheme indication and a modulation scheme indication.

## Patentansprüche

1. Verfahren (400), das von einer Benutzereinrichtung, UE, (110) durchgeführt wird, zur Steuerung der Kommunikation mit einem Funknetzwerkknoten (120) in einem drahtlosen Kommunikationsnetzwerk (100) unter Verwendung von vorkonfigurierten Ressourcen, wobei das Verfahren (400) Folgendes umfasst:
Empfangen (410) einer vorkonfigurierten Ressourcenkonfiguration von dem Funknetzwerkknoten (120), wobei die vorkonfigurierte Ressourcenkonfiguration angibt, ob die UE (110) eine konfliktfreie oder eine Konfliktauflösungsprozedur für eine vorkonfigurierte Ressourcenübertragung an den Funknetzwerkknoten (120) unter Verwendung der vorkonfigurierten Ressourcen, die für die UE (110) spezifisch sind, verwenden soll; und/oder
Senden einer Angabe (420) an den Netzwerkknoten (120), dass eine Nachricht an den Funknetzwerkknoten (120) mit einer vorkonfigurierten Ressourcenübertragung unter Verwendung der vorkonfigurierten Ressourcen assoziiert ist, wobei die Angabe mindestens eine von einer Angabe eines Codierungsschemas, einer Angabe eines Referenzsymbolübertragungsschemas und einer Angabe eines Modulationsschemas umfasst; und
Senden (430) einer Nachricht unter Verwendung der vorkonfigurierten Ressourcen an den Funknetzwerkknoten (120), wobei die UE (110) durch den Funknetzwerkknoten (120) basierend auf der Nachricht identifiziert wird und wobei eine Identifizierung der UE (110) ferner mit mindestens einem von Folgenden assoziiert ist:
der vorkonfigurierten Ressourcenkonfiguration; und
der Angabe.

2. Verfahren (400) nach Anspruch 1, wobei die vorkonfigurierten Ressourcen vorkonfigurierte Uplink-Ressourcen, PUR, sind.

3. Verfahren (400) nach einem der Ansprüche 1 und 2, wobei die UE (110) basierend auf einer mit der gesendeten Nachricht assoziierten temporären Funknetzwerkkennung, RNTI, identifiziert wird.

4. Verfahren (400) nach einem der vorhergehenden Ansprüche, wobei die UE (110) basierend auf mindestens einer von verwendeten Zeit- und verwendeten Frequenzressourcen der gesendeten Nachricht identifiziert wird.

5. Verfahren (400) nach Anspruch 1,
wobei die vorkonfigurierte Ressourcenkonfiguration angibt, dass die UE (110) eine Konfliktauflösungsprozedur durch Konfiguration eines allgemeinen (M/N)PDCCH-Suchraums, CSS, verwenden soll.

6. Verfahren (400) nach Anspruch 1,
wobei die vorkonfigurierte Ressourcenkonfiguration angibt, dass die UE (110) eine konfliktfreie Prozedur durch Konfiguration eines benutzerspezifischen (M/N)PDCCH-Suchraums, USS, verwenden soll.

7. Verfahren (500), das von einem Funknetzwerkknoten, (120) durchgeführt wird, zur Steuerung der Kommunikation in einem drahtlosen Kommunikationsnetzwerk (100) unter Verwendung von vorkonfigurierten Ressourcen, wobei das Verfahren (500) Folgendes umfasst:
Empfangen (530) einer Nachricht von einer Benutzereinrichtung, UE (110) unter Verwendung der vorkonfigurierten Ressourcen, wobei die UE (110) basierend auf der Nachricht identifiziert wird und wobei die Identifizierung der UE (110) ferner mit mindestens einem von Folgenden assoziiert ist:
einer vorkonfigurierten Ressourcenkonfiguration, wobei die vorkonfigurierte Ressourcenkonfiguration angibt, ob die UE (110) eine konfliktfreie oder eine Konfliktauflösungsprozedur für die vorkonfigurierte Ressourcenübertragung an den Funknetzwerkknoten (120) unter Verwendung der vorkonfigurierten Ressourcen, die für die UE (110) spezifisch sind, verwenden soll; und/oder
einer von der UE (110) empfangenen Angabe, dass die Nachricht mit einer vorkonfigurierten Ressourcenübertragung assoziiert ist, wobei die Angabe mindestens eine von einer Angabe eines Codierungsschemas, einer Angabe eines Referenzsymbolübertragungsschemas und einer Angabe eines Modulationsschemas umfasst.

8. Verfahren (500) nach Anspruch 7, wobei die vorkonfigurierten Ressourcen vorkonfigurierte Uplink-Ressourcen, PUR, sind.

9. Verfahren (500) nach einem der Ansprüche 7 und 8, wobei die UE (110) basierend auf einer mit der gesendeten Nachricht assoziierten temporären Funknetzwerkkennung, RNTI, identifiziert wird.

10. Verfahren (500) nach der Ansprüche 7 bis 9,
wobei die UE (110) basierend auf mindestens einer von einer verwendeten Zeitressource und einer verwendeten Frequenzressource der gesendeten Nachricht identifiziert wird.

11. Verfahren (500) nach Anspruch 7,
wobei die vorkonfigurierte Ressourcenkonfiguration angibt, dass die UE (110) eine Konfliktauflösungsprozedur durch Konfiguration eines allgemeinen (M/N)PDCCH-Suchraums, CSS, verwenden soll.

12. Verfahren (500) nach Anspruch 7,
wobei die vorkonfigurierte Ressourcenkonfiguration angibt, dass die UE (110) eine konfliktfreie Prozedur durch Konfiguration eines benutzerspezifischen (M/N)PDCCH-Suchraums, USS, verwenden soll.

13. Benutzereinrichtung, UE, (110) zum Steuern der Kommunikation mit einem Funknetzwerkknoten (120) in einem drahtlosen Kommunikationsnetzwerk (100) unter Verwendung von vorkonfigurierten Ressourcen, wobei die UE (110) zu Folgendem konfiguriert ist:
Empfangen einer vorkonfigurierten Ressourcenkonfiguration von dem Funknetzwerkknoten (120), wobei die vorkonfigurierte Ressourcenkonfiguration angibt, ob die UE (110) eine konfliktfreie oder eine Konfliktauflösungsprozedur für eine vorkonfigurierte Ressourcenübertragung einer Nachricht an den Funknetzwerkknoten (120) unter Verwendung der vorkonfigurierten Ressourcen, die für die UE (110) spezifisch sind, verwenden soll; und/oder Senden einer Angabe an den Netzwerkknoten (120), dass eine Nachricht an den Funknetzwerkknoten (120) mit einer vorkonfigurierten Ressourcenübertragung unter Verwendung der vorkonfigurierten Ressourcen assoziiert ist, wobei die Angabe mindestens eine von einer Angabe eines Codierungsschemas, einer Angabe eines Referenzsymbolübertragungsschemas und einer Angabe eines Modulationsschemas umfasst; und
Senden einer Nachricht unter Verwendung der vorkonfigurierten Ressourcen an einen Funknetzwerkknoten (120), wobei die UE (110) durch den Funknetzwerkknoten (120) basierend auf der Nachricht identifiziert wird und wobei eine Identifizierung der UE (110) ferner mit mindestens einem von Folgenden assoziiert ist:
der vorkonfigurierten Ressourcenkonfiguration; und
der Angabe.

14. Funknetzwerkknoten (120) zum Steuern der Kommunikation in einem drahtlosen Kommunikationsnetzwerk (100) unter Verwendung von vorkonfigurierten Ressourcen, wobei der Funknetzwerkknoten (120) zu Folgendem konfiguriert ist:
Empfangen einer Nachricht von einer Benutzereinrichtung, UE (110) unter Verwendung der vorkonfigurierten Ressourcen, wobei die UE (110) basierend auf der Nachricht identifiziert wird und wobei eine Identifizierung der UE (110) ferner mit mindestens einem von Folgenden assoziiert ist:
einer vorkonfigurierten Ressourcenkonfiguration, wobei die vorkonfigurierte Ressourcenkonfiguration angibt, ob die UE (110) eine konfliktfreie oder eine Konfliktauflösungsprozedur für die vorkonfigurierte Ressourcenübertragung an den Funknetzwerkknoten (120) unter Verwendung der vorkonfigurierten Ressourcen, die für die UE (110) spezifisch sind, verwenden soll; und/oder
einer von der UE (110) empfangenen Angabe, dass die Nachricht mit einer vorkonfigurierten Ressourcenübertragung assoziiert ist, wobei die Angabe mindestens eine von einer Angabe eines Codierungsschemas, einer Angabe eines Referenzsymbolübertragungsschemas und einer Angabe eines Modulationsschemas umfasst.

## Revendications

1. Procédé (400) réalisé par un équipement utilisateur, UE, (110) pour commander une communication vers un nœud de réseau radio (120) dans un réseau de communication sans fil (100) à l'aide de ressources préconfigurées, dans lequel le procédé (400) comprend :
la réception (410) d'une configuration de ressources préconfigurées depuis le nœud de réseau radio (120), dans lequel la configuration de ressources préconfigurées indique si l'UE (110) doit utiliser une procédure sans conflit ou une procédure de résolution de conflit pour une transmission de ressources préconfigurées au nœud de réseau radio (120) à l'aide des ressources préconfigurées qui sont spécifiques à l'UE (110) ; et/ou
la transmission d'une indication (420) au nœud de réseau radio (120) qu'un message au nœud de réseau radio (120) est associé à une transmission de ressources préconfigurées à l'aide des ressources préconfigurées, dans lequel l'indication comprend au moins l'une parmi une indication de schéma de codage, une indication de schéma de transmission de symbole de référence et une indication de schéma de modulation ; et
la transmission (430) d'un message au nœud de réseau radio (120) à l'aide des ressources préconfigurées, dans lequel l'UE (110) doit être identifié par le nœud de réseau radio (120) sur la base du message et dans lequel une identification de l'UE (110) est en outre associée à au moins l'une parmi :
la configuration de ressources préconfigurées ; et
l'indication.

2. Procédé (400) selon la revendication 1, dans lequel les ressources préconfigurées sont des ressources préconfigurées de liaison montante, PUR.

3. Procédé (400) selon l'une quelconque des revendications 1 et 2, dans lequel l'UE (110) est identifié sur la base d'un identifiant temporaire de réseau radio, RNTI, associé au message transmis.

4. Procédé (400) selon l'une quelconque des revendications précédentes, dans lequel l'UE (110) est identifié sur la base d'au moins l'une parmi des ressources de temps utilisé et de fréquence utilisée du message transmis.

5. Procédé (400) selon la revendication 1, dans lequel la configuration de ressources préconfigurées indique que l'UE (110) doit utiliser une procédure de résolution de conflit par configuration d'un espace de recherche (M/N)PDCCH commun, CSS.

6. Procédé (400) selon la revendication 1, dans lequel la configuration de ressources préconfigurées indique que l'UE (110) doit utiliser une procédure sans conflit par configuration d'un espace de recherche (M/N)PDCCH spécifique à l'utilisateur, USS.

7. Procédé (500) réalisé par un nœud de réseau radio (120) pour commander une communication dans un réseau de communication sans fil (100) à l'aide de ressources préconfigurées, le procédé (500) comprenant :
la réception (530) d'un message d'un équipement utilisateur, UE, (110), à l'aide des ressources préconfigurées, dans lequel l'UE (110) est identifié sur la base du message et dans lequel l'identification de l'UE (110) est en outre associée à au moins l'une parmi :
une configuration de ressources préconfigurées, dans lequel la configuration de ressources préconfigurées indique si l'UE (110) doit utiliser une procédure sans conflit ou une procédure de résolution de conflit pour la transmission de ressources préconfigurées au nœud de réseau radio (120) à l'aide des ressources préconfigurées qui sont spécifiques à l'UE (110) ; et
une indication, reçue depuis l'UE (110), que le message est associé à une transmission de ressources préconfigurées, dans lequel l'indication comprend au moins l'une parmi une indication de schéma de codage, une indication de schéma de transmission de symbole de référence et une indication de schéma de modulation.

8. Procédé (500) selon la revendication 7, dans lequel les ressources préconfigurées sont des ressources préconfigurées de liaison montante, PUR.

9. Procédé (500) selon l'une quelconque des revendications 7 et 8, dans lequel l'UE (110) est identifié sur la base d'un identifiant temporaire de réseau radio, RNTI, associé au message transmis.

10. Procédé (500) selon l'une quelconque des revendications 7 à 9, dans lequel l'UE (110) est identifié sur la base d'au moins l'une parmi une ressource de temps utilisé et une ressource de fréquence utilisée du message transmis.

11. Procédé (500) selon la revendication 7, dans lequel la configuration de ressources préconfigurées indique que l'UE (110) doit utiliser une procédure de résolution de conflit par configuration d'un espace de recherche (M/N)PDCCH commun, CSS.

12. Procédé (500) selon la revendication 7, dans lequel la configuration de ressources préconfigurées indique que l'UE (110) doit utiliser une procédure sans conflit par configuration d'un espace de recherche (M/N)PDCCH spécifique à l'utilisateur, USS.

13. Equipement utilisateur, UE, (110) pour commander une communication vers un nœud de réseau radio (120) dans un réseau de communication sans fil (100) à l'aide de ressources préconfigurées, dans lequel l'UE (110) est configuré pour :
recevoir une configuration de ressources préconfigurées depuis le nœud de réseau radio (120), dans lequel la configuration de ressources préconfigurées indique si l'UE (110) doit utiliser une procédure sans conflit ou une procédure de résolution de conflit pour une transmission de ressources préconfigurées au nœud de réseau radio (120) à l'aide des ressources préconfigurées qui sont spécifiques à l'UE (110) ; et/ou
transmettre une indication au nœud de réseau radio (120) qu'un message au nœud de réseau radio (120) est associé à une transmission de ressources préconfigurées à l'aide des ressources préconfigurées, dans lequel l'indication comprend au moins l'une parmi une indication de schéma de codage, une indication de schéma de transmission de symbole de référence et une indication de schéma de modulation ; et
transmettre un message à un nœud de réseau radio (120) à l'aide des ressources préconfigurées, dans lequel l'UE (110) doit être identifié par le nœud de réseau radio (120) sur la base du message et dans lequel une identification de l'UE (110) est en outre associée à au moins l'une parmi :
la configuration de ressources préconfigurées ; et
l'indication.

14. Nœud de réseau radio (120) pour commander une communication dans un réseau de communication sans fil (100) à l'aide de ressources préconfigurées, dans lequel le nœud de réseau radio (120) est configuré pour :
recevoir un message d'un équipement utilisateur, UE, (110), à l'aide des ressources préconfigurées, dans lequel l'UE (110) est identifié sur la base du message et dans lequel une identification de l'UE (110) est en outre associée à au moins l'une parmi :
une configuration de ressources préconfigurées, dans lequel la configuration de ressources préconfigurées indique si l'UE (110) doit utiliser une procédure sans conflit ou une procédure de résolution de conflit pour la transmission de ressources préconfigurées au nœud de réseau radio (120) à l'aide des ressources préconfigurées qui sont spécifiques à l'UE (110) ; et
une indication, reçue depuis l'UE (110), que le message est associé à une transmission de ressources préconfigurées, dans lequel l'indication comprend au moins l'une parmi une indication de schéma de codage, une indication de schéma de transmission de symbole de référence et une indication de schéma de modulation.
